# EUROPEAN PATENT APPLICATION

(11) **EP 1 679 533 A1**
(43) Date of publication of application: **12.07.2006**
(21) Application number: 04817415.5
(22) Date of filing: 25.10.2004
(51) Int. Cl.: G02B 6/42, H01S 5/022

(54) **OPTICAL TRANSMISSION DEVICE**

(30) Priority: 30.10.2003 JP 2003370365
(71) Applicant: MATSUSHITA ELECTRIC INDUSTRIAL CO., LTD., Kadoma-shi, Osaka 571-8501 (JP)
(72) Inventor: TOGO, H., Panasonic Mobile Communications Co Ltd, Yokohama-shi, Kanagawa 224-8539 (JP); ODA, K, Panasonic Mobile Communications Co Ltd, Yokohama-shi, Kanagawa 224-8539 (JP); SATO, Y., Panasonic Mobile Communications Co., Ltd, Yokohama-shi, Kanagawa 224-8539 (JP); ASANO, H., Panasonic Mobile Communications Co.Ltd, Yokohama-shi, Kanagawa 224-8539 (JP)
(74) Representative: Grünecker, Kinkeldey, Stockmair & Schwanhäusser Anwaltssozietät
(86) International application number: PCT/JP2004/015786
(87) International publication number: WO 2005/043207

(57) **Abstract**

Optical transmission apparatus 100 is provided with laser element 101 and optical fiber 102 and has an optimum position where the efficiency of optical coupling between laser element 101 and optical fiber 102 becomes a maximum. Laser element 101 and optical fiber 102 are fixed at positions shifted from the optimum position in the direction of the optical axis by a value within a range from 10µm to 150µm. It is possible to construct the apparatus such that outgoing light of laser element 101 is not parallel to the optical axis of outgoing light from an end face of optical fiber 102 and the outgoing light of laser element 101 is not parallel to the optical axis of light reflected on the end face of optical fiber 102.

## Description

### Technical Field

The present invention relates to an optical transmission apparatus which performs a video delivery or mobile radio signal transmission using an optical transmission technology.

### Background Art

An optical fiber transmission technology which superimposes frequency-multiplexed subcarrier high frequency signals on light intensity of laser light is used for multi-channel video signal transmission or long-distance transmission between antennas from a base station in a radio transmission system of mobile communication or the like. This analog transmission using frequency-multiplexed signals requires no D/A converter or the like and facilitates transmission of large volume data compared with digital signal transmission, but it is unable to avoid degradation of the transmission characteristic due to harmonic distortion caused by multiple reflections of light or the like.

For this reason, it is necessary to use an expensive optical isolator for analog transmission with this frequency-multiplexed signal, and it is also necessary to clean a connector end face to suppress reflection of connection sections of an optical connector. Especially, an optical connector whose amount of light reflection attenuation becomes equal to or more than 40 dB is used for an optical fiber transmission path and an optical transmission system is designed assuming that there is substantially no reflected returned light.

Next, two conventional optical transmission apparatuses used for an analog signal optical transmission system will be explained.

A first example of a conventional optical transmission apparatus is described in Patent Document 1 and Patent Document 2. As shown in FIG.1, this first conventional optical transmission apparatus 10 is provided with laser element 11, lens 12, optical isolator 13, lens 14 and optical fiber 15.

Lens 12, optical isolator 13 and lens 14 are arranged between laser element 11 and optical fiber 15. Optical isolator 13 is intended to suppress returned light to laser element 11. Also, to suppress reflected returned light which is laser light reflected on an end face of optical fiber 15, a method of applying non-reflective coating to the end face of optical fiber 15 and diagonally polishing the end face of optical fiber 15 is used. An optical axis adjustment between laser element 11 and optical fiber 15 is performed using an active alignment method whereby while the intensity of laser light is being monitored, a point at which the intensity reaches a maximum is fixed.

An example using a Fabry-Perot laser (FP-LD) as laser element 11 is described in Patent Document 1. Since the FP-LD involves a large characteristic degradation by mode partition noise due to a multi-mode oscillation laser, a single-mode distribution feedback type laser (DFB-LD) is often used.

Furthermore, a second example of the conventional optical transmission apparatus is described in Patent Document 3. As shown in FIG.2, this second conventional optical transmission apparatus 20 is provided with laser element 21 and optical fiber 22, and designed to directly couple laser element 21 and optical fiber 22 without any lenses. Laser element 21 is accurately mounted on a silicon substrate in which a V groove is formed and a passive alignment method requiring no optical axis adjustment with respect to optical fiber 22 is used. In order to suppress reflected returned light on an end face of optical fiber 22, the end face of optical fiber 22 is worked into a diagonal plane and a space between optical fiber 22 and laser element 21 is filled with refractive index matching resin.
Patent Document 1 : Unexamined Japanese Patent Publication No. 2000-193854
Patent Document 2: Unexamined Japanese Patent Publication No. HEI 7-38531
Patent Document 3: Unexamined Japanese Patent Publication No. 2001-21775

### Disclosure of Invention

### Problems to be Solved by the Invention

However, the first conventional optical transmission apparatus has a problem that an expensive part such as an optical isolator is necessary to suppress reflected returned light which is a cause for degradation of a distortion characteristic.

Furthermore, since the second conventional optical transmission apparatus requires no optical isolator or lens, it is possible to reduce parts costs, but there is a problem that the distortion characteristic is likely to degrade due to influences of a tiny amount of returned light on a ferrule end face which is an output terminal of module light and in the transmission path of the optical fiber.

The present invention has been implemented in view of the above described problems and it is an object of the present invention to provide an optical transmission apparatus involving only a small influence of reflected returned light and capable of realizing analog transmission using only low-cost parts.

### Means for Solving the Problem

The optical transmission apparatus of the present invention comprising a laser element and an optical fiber and having an optimum position where the efficiency of optical coupling between the laser element and the optical fiber becomes a maximum adopts a configuration in which the laser element and the optical fiber are fixed at positions shifted from the optimum position in the direction of the optical axis by a value within a range from 10µm to 150µm.

### Advantageous Effect of the Invention

The present inventionmakes it possible to provide an optical transmission apparatus with a small influence of reflected returned light and capable of realizing analog transmission using only low-cost parts.

### Brief Description of Drawings

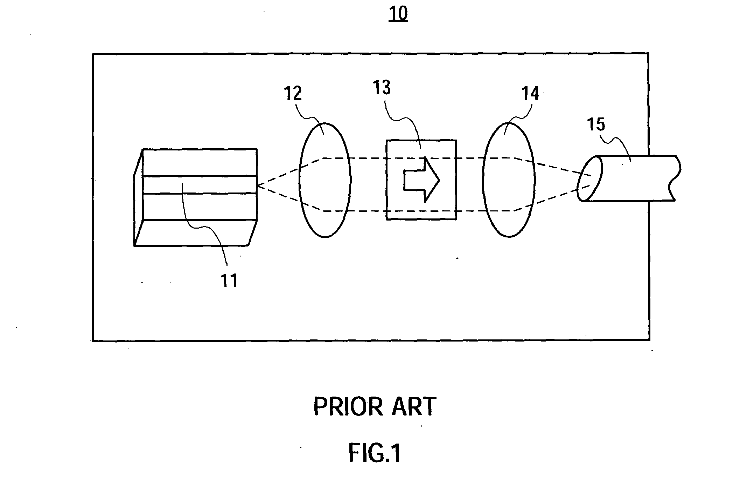

FIG.1 shows the configuration of a first conventional optical transmission apparatus;

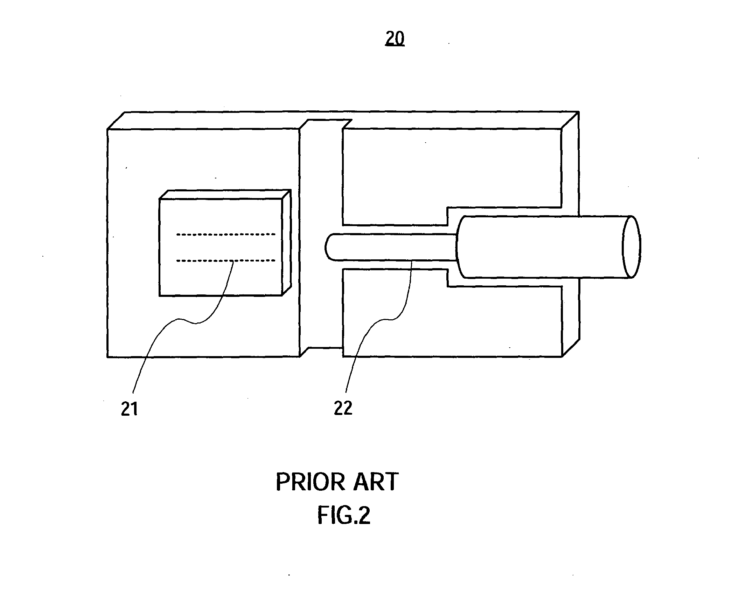

FIG.2 shows the configuration of a second conventional optical transmission apparatus;
FIG.3 is a perspective view showing an optical transmission apparatus according to Embodiment 1 of the present invention;
FIG.4 shows the basic configuration of the optical transmission apparatus according to Embodiment 1 of the present invention;
FIG.5 illustrates the configuration of the optical transmission apparatus according to Embodiment 1 of the present invention;
FIG.6 shows the basic configuration of an optical transmission apparatus according to Embodiment 2 of the present invention;
FIG.7 shows the basic configuration of an optical transmission apparatus according to Embodiment 3 of the present invention;
FIG.8 is a block diagram showing the basic configuration of an optical transmission system according to Embodiment 4 of the present invention; and
FIG.9 is a block diagram showing the basic configuration of an optical transmission system according to Embodiment 5 of the present invention.

### Best Mode for Carrying Out the Invention

Now, embodiments of the present invention will be described with reference to the accompanying drawings.

### (Embodiment 1)

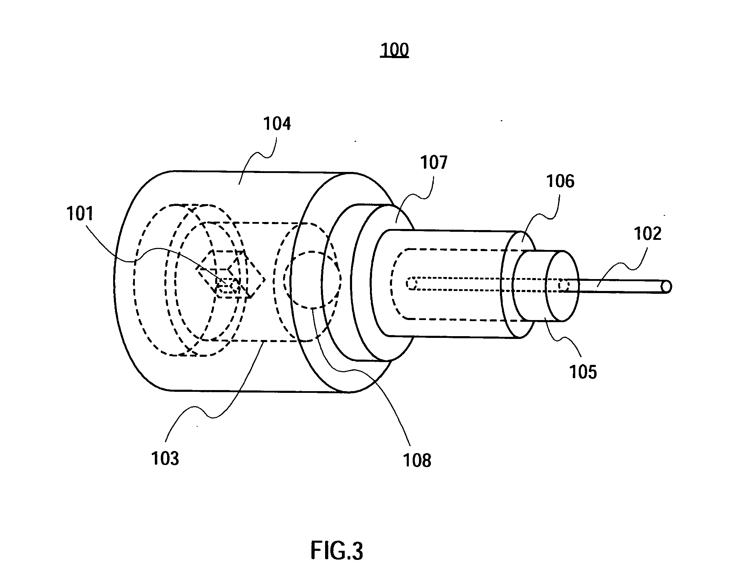

FIG.3 is a perspective view of an optical transmission apparatus according to Embodiment 1 of the present invention. As shown in FIG.3, optical transmission apparatus 100 according to Embodiment 1 of the present invention is provided with laser element (LD) 101 and optical fiber 102 which is isolated from this laser element 101 by a predetermined distance.

Laser element 101 is held in cylindrical can package 103. Can package 103 is coated and held by cylindrical part holder 104. Optical fiber 102 is held by cylindrical ferrule 105 made of ceramic. Ferrule 105 is coated and held by cylindrical part holder 106.

Part holder 104 and part holder 106 are connected by sleeve 107. Lens 108 is arranged between laser element 101 and one end face of optical fiber 102. Lens 108 is held by can package 103. Lens 108 condenses laser light radiated from laser element 101 and makes it enter the one end face of optical fiber 102.

Optical transmission apparatus 100 has an optimum position where the efficiency of optical coupling between laser element 101 and optical fiber 102 becomes a maximum. Laser element 101 and optical fiber 102 are fixed at positions shifted from the optimum position in the direction of the optical axis by a value within a range from 10µm to 150µm.

Lens 108 is composed of a ball lens. The ball lens is less expensive than an aspherical lens but has lower optical coupling efficiency. The efficiency of optical coupling between the ball lens and optical fiber 102 is approximately 10 to 20%, whereas the efficiency of optical coupling between an aspherical lens and optical fiber 102 is approximately 30 to 50%.

In the above described optical system using a lens, there is one optimum position on the end face of optical fiber 102 where the efficiency of optical coupling with laser element 101 becomes a maxim. In order to find out this optimum position, a method of adjusting the position of optical fiber 102 while monitoring the intensity of light coupled with optical fiber 102 until the position is reached where the intensity becomes a maximum and then fixing optical fiber 102 through YAG laser welding or the like is generally used.

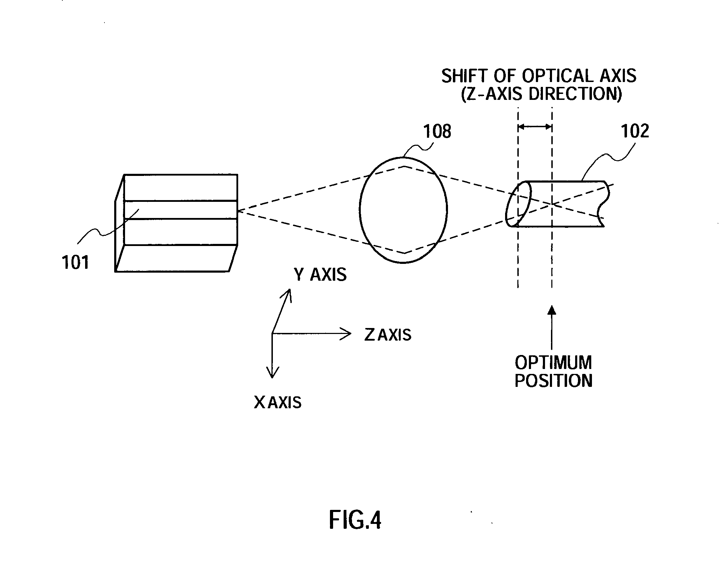

According to Embodiment 1 of the present invention, laser element 101 and optical fiber 102 are fixed at positions shifted from the optimum position where the optical coupling efficiency becomes a maxim in the direction (Z-axis direction) of the optical axis by a predetermined range as shown in FIG.4.

This optical transmission apparatus can be manufactured by adding a step of fixing the end face of optical fiber 102 at a position shifted with respect to laser element 101 by a value within a range from 10µm to 150µm in the direction (Z-axis direction) of the optical axis of optical fiber 102 subsequent to a normal adjustment step of finding out an optimum position where the optical coupling efficiency becomes a maximum.

It is alsopossible to shift the end face of optical fiber 102 with respect to laser element 101 in the X-axis or Y-axis direction which is perpendicular to the optical axis of optical fiber 102, but since the optical coupling efficiency degrades drastically with respect to displacement on the X, Y axes and it is difficult to perform adjustments, it is desirable to shift the end face of optical fiber 102 with respect to laser element 101 in the direction (Z-axis direction) of the optical axis of optical fiber 102.

Using such a method, the efficiency of optical coupling between laser element 101 and the optical fiber is made not to exceed 10%. In the conventional adjustment process in which the optical coupling efficiency becomes a maximum, the position of the optical fiber may be shifted unexpectedly, but shifts exceeding 10µm cannot occur under normal circumstances. For example, the amount of shift of an optical fiber before and after YAG laser welding is generally equal to or less than several µm. Therefore, a decrease in the optical coupling efficiency according to Embodiment 1 of the present invention can be achieved only intentionally.

Next, that laser element 101 and optical fiber 102 are fixed at positions shifted from the optimum position in the direction of the optical axis by a value within a range from 10µm to 150µm will be explained.

The amount of shift of the optical fiber before and after YAG laser welding for fixing the conventional optical fiber is not more than several µm and a decrease of the optical coupling efficiency is only several percent. Therefore, it is necessary to intentionally cause a decrease of the optical coupling efficiency to occur and a shift of at least 10µm or more is necessary. On the other hand, when the amount of shift becomes excessively large, a signal to noise ratio (CNR) deteriorates, and therefore there is an upper limit to the allowable amount of shift.

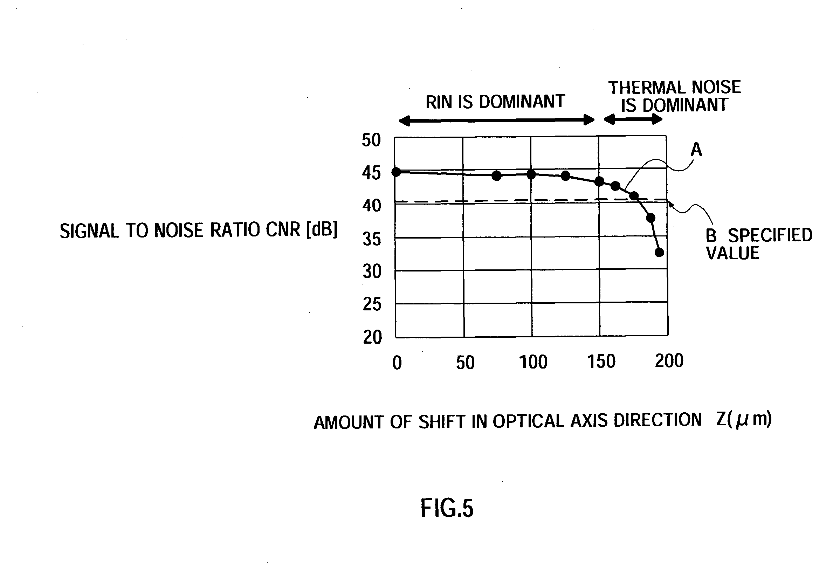

FIG.5 shows an example of the calculation result of a signal to noise ratio (CNR) with respect to the amount of shift in the direction of the optical axis of optical fiber 102. Curve A in FIG. 5 shows the calculation result of a signal to noise ratio (CNR) with respect to the amount of shift in the direction of the optical axis of optical fiber 102. Furthermore, curve B in FIG.5 shows a specified value.

As shown in FIG.5, the reason why no considerable change is observed in the signal to noise ratio (CNR) even if the amount of shift increases up to 100µm is because the relative noise ratio (RIN) of laser element 101 with respect to the signal to noise ratio (CNR) is dominant. On the other hand, the signal to noise ratio (CNR) increases rapidly when the amount of shift grows to exceed 150µm because thermal noise becomes dominant. Generally, in an analog transmission, it is understandable from FIG.5 that the signal to noise ratio (CNR) needs to be equal to or more than 40 dB, and therefore the amount of shift needs to be equal to or less than 150µm. As described above, the amount of shift in the direction of the optical axis of optical fiber 102 must be a value within a range from 10µm to 150µm.

Possible causes for reflected returned light from optical fiber 102 are reflected returned light of the light receiving element and reflection of the optical connector. The reflected returned light of the light receiving element can be easily improved by shifting the angle of the surface of the light receiving element with respect to the incident light from 90°.

On the other hand, in order to reduce reflection of the optical connector, an angled physical contact (APC) connector obtained by diagonally polishing the end face of optical fiber 102 is often used and it is possible to thereby realize reflected returned light of 60 dB or less, but the angled physical contact (APC) connector is expensive.

A super PC (SPC) connector which is often used in a digital transmission system can obtain reflected returned light of 40 dB or less, but when cleaning of the connector is not sufficient or when the end face of the connector has a flaw, a possibility that the reflected returned light may become 25 dB to 30 dB is unavoidable.

Therefore, if the analog characteristic can be prevented from degrading even with 25 dB, it is possible to construct a system using a low-cost connector without being affected by the degradation of the end face of the connector. From the above described result, it is desirable to allow the use of a low-cost PC connector by reducing the optical coupling efficiency of a multi-mode oscillation laser element to 10% or less.

The case where the influence of the reflected returned light is decreased most and a low-cost can package and multi-mode oscillation laser element (FP-LD) are used has been explained above as an example, but improvement of the reflection resistance can be expected by lowering optical coupling efficiency as mentioned above also when the optical isolator is incorporated or a single-mode oscillation laser element (DFB-LD) is used.

In this way, according to Embodiment 1 of the present invention, since laser element 101 and optical fiber 102 are fixed at positions shifted from the above described optimumposition in the direction of the optical axis by a value within a range from 10µm to 150µm, and therefore the influence of the reflected returned light is small and it is possible to realize an analog transmission using only low-costparts. Furthermore, in Embodiment 1 of the present invention, it is only necessary to arrange the laser element and optical fiber within a predetermined range, which makes manufacturing easier.

### (Embodiment 2)

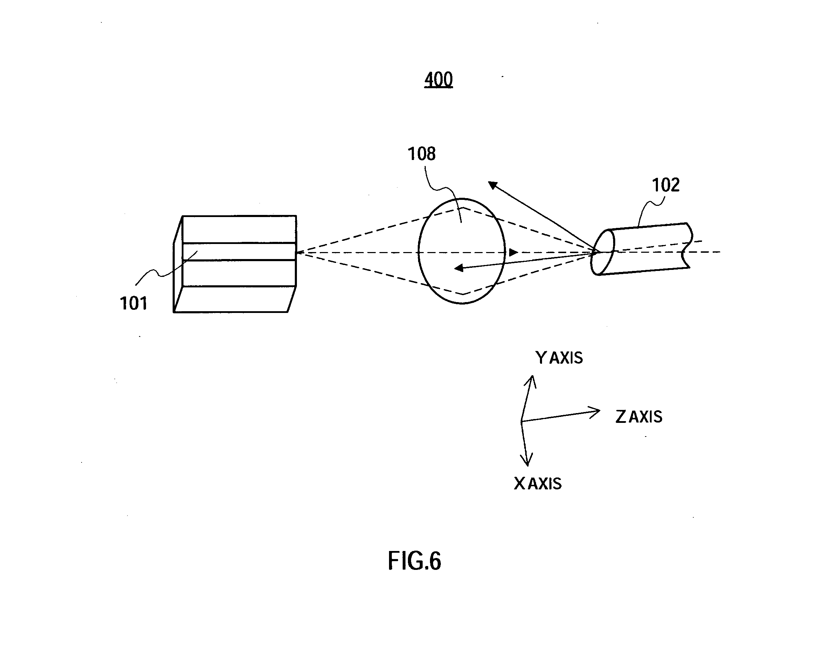

Next, Embodiment 2 of the present invention will be explained with reference to the accompanying drawings in detail. FIG.6 shows the basic configuration of an optical transmission apparatus according to Embodiment 2 of the present invention. In Embodiment 2 of the present invention, the same components as those in Embodiment 1 are assigned the same reference numerals and explanations thereof will be omitted.

As shown in FIG. 6, optical transmission apparatus 400 according to Embodiment 2 of the present invention is designed such that laser element 101 and optical fiber 102 are fixed at positions shifted from the above described optimum position in the direction of the optical axis by a value within a range from 10µm to 150µm, outgoing light of laser element 101 is not parallel to the optical axis of the outgoing light from the end face of optical fiber 102 and the outgoing light of laser element 101 is not parallel to the optical axis of the light reflected on the end face of optical fiber 102.

As is normally practiced with optical transmission apparatus 400, the end face of optical fiber 102 is worked into a diagonal plane, the optical axis of the outgoing light of laser element 101 and the optical axis of reflected light on the end face of optical fiber 102 are not parallel to each other but formed so as to form an angle therebetween and to prevent reflected light of laser light from returning at the end face of optical fiber 102. Furthermore, manufacturing process of light transmitting apparatus 400 includes tilting the optical axis of optical fiber 102 by giving an angle to the optical axis of outgoing light so that the optical axis of outgoing light of optical fiber 102 is not parallel to the outgoing light of laser element 101 in order to prevent the outgoing light of optical fiber 102 from returning to laser element 101. Manufacturing process of light transmitting apparatus 400 also includes causing the intensity of light coupled with optical fiber 102 to become a maximum by parallel-translating the position of optical fiber 102 and moving X,Y,Z shown in the figure and then, fixing optical fiber 102 through YAG laser welding.

The following three methods are available to tilt the optical axis of optical fiber 102 so as to provide an angle to prevent the optical axis of outgoing light from becoming parallel to the outgoing light of laser element 101 in addition to the above described method of tilting the optical axis of optical fiber 102.

One method is to polish the end face of optical fiber 102 into a diagonal plane so as to form an angle of several degrees to thereby cause the outgoing light of optical fiber 102 to be diagonal with respect to the optical axis of optical fiber 102. The second method is to rotate optical fiber 102 with respect to the optical axis of optical fiber 102 to thereby adjust the angle. The third method is to arrange a part (sleeve) which holds optical fiber 102 beforehand so that the optical axis of optical fiber 102 is tilted.

Thus, in Embodiment 2 of the present invention, in addition to the effects in Embodiment 1 of the present invention, since the outgoing light of laser element 101 is not parallel to the optical axis of the outgoing light from the end face of optical fiber 102 and the outgoing light of laser element 101 is not parallel to the optical axis of the light reflected on the end face of optical fiber 102, and thereby the step is not necessary to shift the X, Y, Z axes from the above described optimum value as in the case of Embodiment 1 of the present invention and the adjustment of the positions of laser element 101 and optical fiber 102 is easy.

### (Embodiment 3)

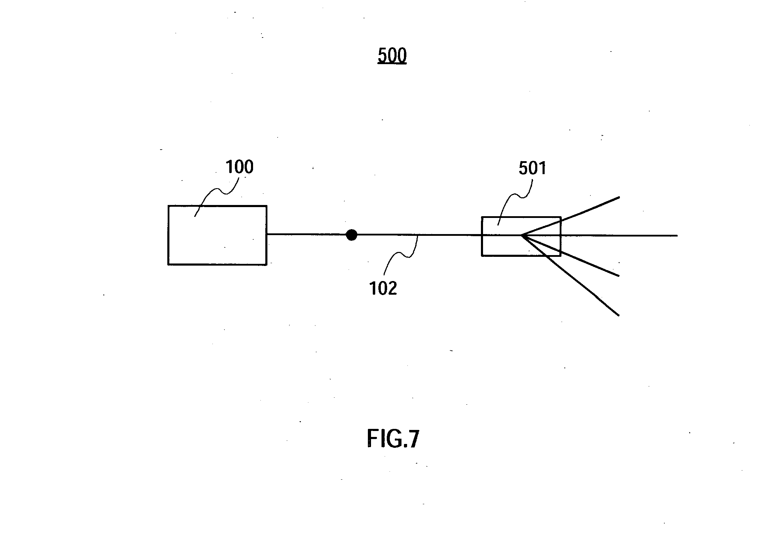

Next, Embodiment 3 of the present invention will be explained with reference to the accompanying drawings in detail. FIG.7 shows the basic configuration of an optical transmission apparatus according to Embodiment 3 of the present invention. In Embodiment 3 of the present invention, the same components as those in Embodiment 1 of the present invention are assigned the same reference numerals and explanations thereof will be omitted.

Optical transmission apparatus 500 according to Embodiment 3 of the present invention shown in FIG.7 is provided with optical transmission apparatus 100 and multi-branching optical coupler 501, and laser element 101 of optical transmission apparatus 100 is a multi-mode oscillation laser element and optical fiber 102 is a 1.3µm zero-dispersion type optical fiber, multi-branching optical coupler 501 is connected subsequent to laser element 101, and the product of the efficiency optical coupling between laser element 101 and optical fiber 102 and the square of the reciprocal of the number of branches of multi-branching optical coupler 501 is equal to or less than 10%.

Optical transmission apparatus 500 according to Embodiment 3 shown in FIG.7 is an optical transmission apparatus for downlink analog signals. In an analog signal transmission system in which a plurality of child stations are connected to one parent station as in the case of a mobile base station antenna system, by transmitting to a plurality of child stations using multi-branching optical coupler 501 for one downlink laser element 101, it is possible to reduce the number of laser elements 101 of the parent station.

However, since the power of optical output decreases due to many optical branches, it is desirable to make the optical coupling efficiency of downlink laser element 101 as large as possible. Conventionally, a high output, multi-mode oscillation laser element (FP-LD) or single-mode oscillation laser element (DFB-LD) is used, but an optical isolator is indispensable to avoid degradation by reflected returned light.

To eliminate an optical isolator and obtain high output laser light with no characteristic degradation due to reflected returned light, Embodiment 3 of the present invention optically couples a 1.3µm band multi-mode oscillation laser element (FP-LD) incorporated in a can package with a lens with optical fiber 102 and then connects multi-branching optical coupler 501 through fusion splicing.

Reflected returned light from multi-branching optical coupler 501generated on the transmission path side attenuates when passing through multi-branching optical coupler 501. Considering this, if the number of branches of multi-branching optical coupler 501 is assumed to be N, the reflected returned light attenuates by the square of 1/N, and therefore it is possible to increase optical coupling efficiency of multi-mode oscillation laser element (FP-LD) by the square of N compared to Embodiment 1 of the present invention. In order to increase optical coupling efficiency, for example, an aspherical lens may be used.

Embodiment 3 of the present invention may include optical transmission apparatus 400 instead of optical transmission apparatus 100.

In this way, in Embodiment 3 of the present invention, even if reflected returned light is generated, it is possible to reduce influences of the reflected returned light in addition to the effects of Embodiment 1 or Embodiment 2 of the present invention.

### (Embodiment 4)

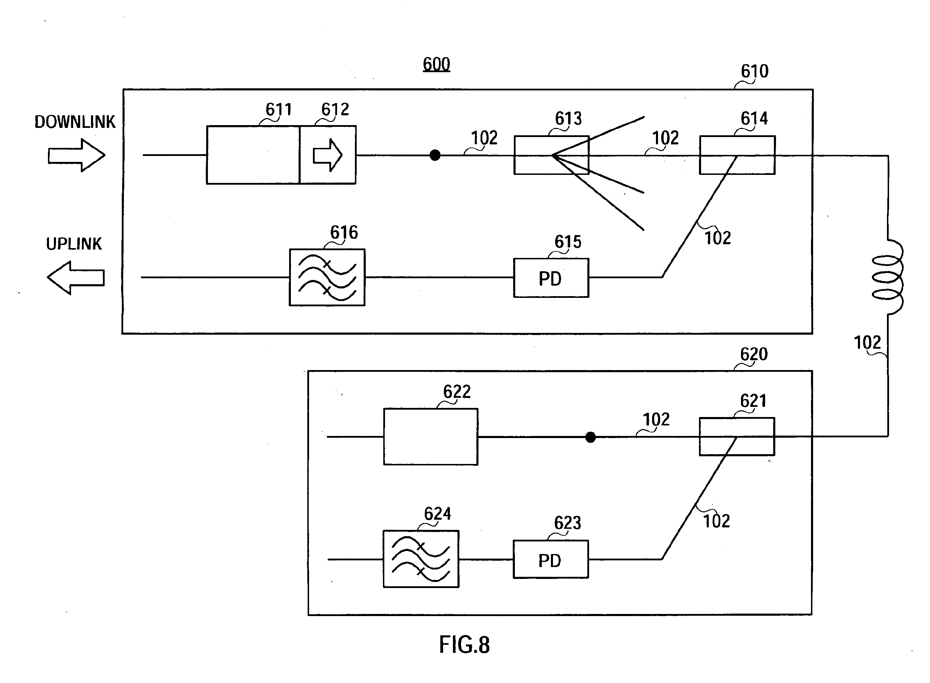

Next, Embodiment 4 of the present invention will be explained with reference to the accompanying drawings in detail. FIG.8 is a block diagram showing the basic configuration of an optical transmission system according to Embodiment 4 of the present invention. In Embodiment 4 of the present invention, the same components as those in Embodiment 1 of the present invention are assigned the same reference numerals and explanations thereof will be omitted.

Optical transmission system 600 according to Embodiment 4 of the present invention shown in FIG.8 is provided with parent station 610 and a plurality of child stations 620 (only one child station is shown).

Parent station 610 is provided with optical transmission apparatus 611, optical isolator 612, multi-branching optical coupler 613, wavelength selection filter 614, light receiving element (PD) 615 and frequency separation filter 616. Optical transmission apparatus 611 is connected to optical isolator 612 through optical fiber 102. Optical isolator 612 is connected to multi-branching optical coupler 613 through optical fiber 102. Wavelength selection filter 614 is connected to multi-branching optical coupler 613 and light receiving element 615 through optical fiber 102.

Optical transmission apparatus 611 has the same configuration as that of optical transmission apparatus 100 or optical transmission apparatus 400. Laser element 101 of optical transmission apparatus 611 is a single-mode oscillation laser element which oscillates in a 1.5µm wavelength band. Optical fiber 102 is a 1.3µm zero-dispersion type optical fiber. Each of the plurality of child stations 620 is connected to each of a plurality of output ends of multi-branching optical coupler 613 through the 1-core optical fiber 102.

Child station 620 is provided with wavelength selection filter 621, optical transmission apparatus 622, light receiving element 623 and frequency separation filter 624. Optical transmission apparatus 622 has the same configuration as that of optical transmission apparatus 100 or optical transmission apparatus 400. Laser element 101 of optical transmission apparatus 622 is a multi-mode oscillation laser element which oscillates in a 1.3µm wavelength band. Wavelength selection filter 621 is connected to optical transmission apparatus 622 and light receiving element 623 through optical fiber 102. Furthermore, wavelength selection filter 621 is connected to wavelength selection filter 614 of parent station 610 through optical fiber 102. Wavelength selection filter 621 is made up of a low-cost fusion splicing type with isolation of 10 dB or less. Optical fiber 102 is a 1.3µm zero-dispersion type optical fiber.

Optical transmission system 600 according to Embodiment 4 of the present invention shown in FIG.8 is a 1-core bidirectional optical transmission system for analog transmission. Here, optical transmission system 600 is an analog RF signal transmission system such as a mobile base station antenna system in which a plurality of child stations 620 are connected to one parent station 610.

Both downlink signal and uplink signal are subcarrier signals having a carrier frequency in a certain frequency width and are designed such that there are no overlaps between the uplink and the downlink signal frequency bands.

First, transmission of a downlink signal will be explained. In parent station 610, optical transmission apparatus 611 for the downlink radiates downlink laser light having a wavelength of 1.5µm and gives it to multi-branching optical coupler 613 through optical isolator 612. Multi-branching optical coupler 613 branches the downlink laser light from optical transmission apparatus 611, generates a plurality of downlink branch laser light rays and gives them to a plurality of child stations 620 through optical fiber 102, wavelength selection filter 614 and optical fiber 102.

In child station 620, wavelength selection filter 621 receives the downlink branch laser light from multi-branching optical coupler 613 as the downlink reception laser light, selects and separates the downlink reception laser light having a wavelength of 1.5µm from the downlink reception laser light, and gives it to light receiving element 623. Light receiving element 623 photoelectrically converts the downlink reception laser light, generates a downlink reception signal and gives it to frequency separation filter 624. Frequency separation filter 624 separates only the carrier frequency of the downlink signal from the downlink reception signal received from light receiving element 623.

Next, transmission of an uplink signal will be explained. In child station 620, optical transmission apparatus 622 radiates uplink laser light having a wavelength of 1.3µm and gives uplink laser light to parent station 610 through optical fiber 102, wavelength selection filter 621 and optical fiber 102.

In parent station 610, wavelength selection filter 614 receives the uplink laser light fromwavelength selection filter 621 as the uplink reception laser light, selects and separates the uplink reception laser light having a wavelength of 1.3µm and gives it to light receiving element 615. Light receiving element 615 photoelectrically converts the uplink reception laser light, generates an uplink reception signal and gives it to frequency filter 616. Frequency separation filter 616 separates only the carrier frequency of the uplink signal from the uplink reception signal received from light receiving element 615.

In this way, in embodiment 4 of the present invention, in addition to the effects of any one of Embodiments 1 to 3 of the present invention, it is possible to provide a bidirectional optical transmission system with a 1-core optical fiber which is less affected by reflected returned light.

### (Embodiment 5)

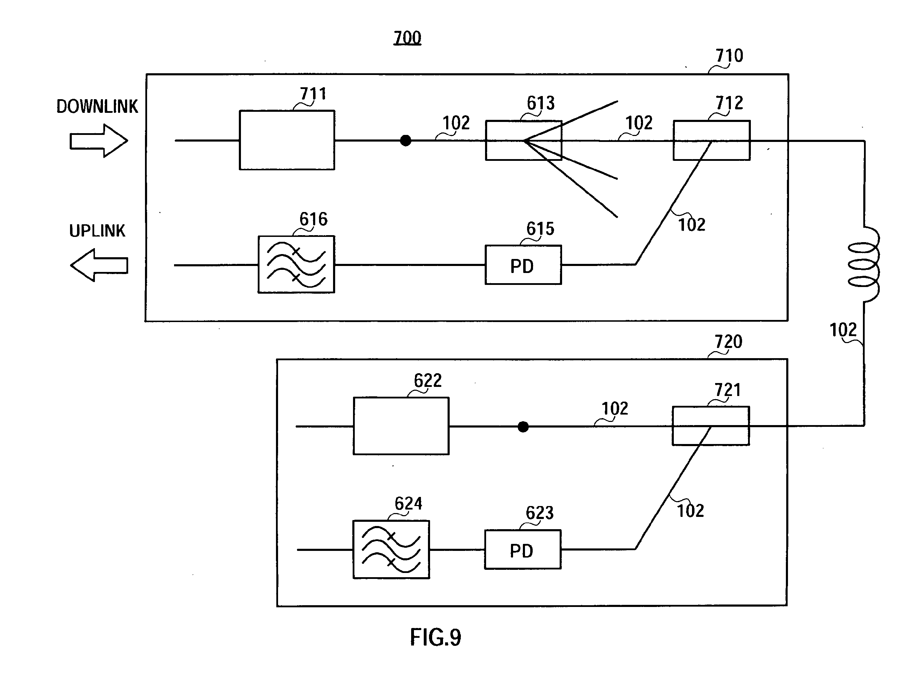

Next, Embodiment 5 of the present invention will be explained with reference to the attached drawing in detail. FIG.9 is a block diagram showing the basic configuration of an optical transmission system according to Embodiment 5 of the present invention. In Embodiment 5 of the present invention, the same components as those in Embodiment 4 of the present invention are assigned the same reference numerals and explanations thereof will be omitted.

Optical transmission system 700 according to Embodiment 5 of the present invention shown in FIG.9 is provided with parent station 710 and a plurality of child stations 720 (only one child station is shown).

Optical transmission system 700 according to Embodiment 5 of the present invention corresponds to Embodiment 4 of the present invention is provided with optical transmission apparatus 711 instead of optical transmission apparatus 611, no optical isolator 612 and 1×2 optical branching couplers 712, 721 instead of wavelength selection filters 614, 621.

In other words, parent station 710 is provided with optical transmission apparatus 711, multi-branching optical coupler 613, 1×2 optical branching coupler 712, light receiving element (PD) 615 and frequency separation filter 616. Optical transmission apparatus 711 has the same configuration as that of optical transmission apparatus 100 or optical transmission apparatus 400. Laser element 101 of transmission apparatus 711 is connected to multi-branching optical coupler 613 through optical fiber 102. 1×2 optical branching coupler 712 is connected to multi-branching optical coupler 613 and light receiving element 615 through optical fiber 102. Laser element 101 of optical transmission apparatus 711 is a multi-mode oscillation laser element which oscillates in a 1.3µm wavelength band. Optical fiber 102 is a 1.3µm zero-dispersion type optical fiber. Each of the plurality of child stations 720 is connected to each of a plurality of output ends of multi-branching optical coupler 613 through a 1-core optical fiber 102.

Child station 720 is provided with 1×2 optical branching coupler 721, optical transmission apparatus 622, light receiving element 623 and frequency separation filter 624. Laser element 101 of optical transmission apparatus 622 is a multi-mode oscillation laser element which oscillates in a 1.3µm wavelength band. 1×2 optical branching coupler 721 is connected to optical transmission apparatus 622 and light receiving element 623 through optical fiber 102. Furthermore, 1×2 optical branching coupler 721 is connected to 1×2 optical branching coupler 712 of parent station 610 through optical fiber 102.

Both downlink signal and uplink signal are subcarrier signals which have a carrier frequency in a certain frequency width and are designed such that there are no overlaps in the uplink and downlink signal frequency bands.

First, transmission of the downlink signal will be explained. In parent station 710, optical transmission apparatus 711 for the downlink radiates downlink laser light having a wavelength of 1.3µm and gives it to multi-branching optical coupler 613. Multi-branchingopticalcoupler613branchesthedownlink laser light from optical transmission apparatus 711, generates a plurality of downlink branch laser light rays and gives them to the plurality of child stations 720 through optical fiber 102, 1×2 optical branching coupler 712 and optical fiber 102.

In child station 720, 1×2 optical branching coupler 721 receives the downlink branch laser light from multi-branching optical coupler 613 as the downlink reception laser light, selects and separates the downlink reception laser light having a wavelength of 1.3µm from the downlink reception laser light and gives it to light receiving element 623. Light receiving element 623 photoelectrically converts downlink reception laser light, generates a downlink reception signal and gives it to frequency separation filter 624. Frequency separation filter 624 separates only the carrier frequency of the downlink signal from the downlink reception signal received from light receiving element 623.

Next, transmission of the uplink signal will be explained. In child station 720, optical transmission apparatus 622 radiates uplink laser light having a wavelength of 1.3µm and gives the uplink laser light to parent station 710 through optical fiber 102, 1×2 optical branching coupler 721 and optical fiber 102.

In parent station 710, 1×2 optical branching coupler 712 receives uplink laser light from 1×2 optical branching coupler 721 as uplink reception laser light, selects and separates uplink reception laser light having a wavelength of 1.3µm from the uplink reception laser light and gives it to light receiving element 615. Light receiving element 615 photoelectrically converts the uplink reception laser light, generates an uplink reception signal and gives it to frequency separation filter 616. Frequency separation filter 616 separates only the carrier frequency of the uplink signal from the uplink reception signal received from light receiving element 615.

In this way, in addition to the effects of any one of Embodiments 1 to 3 of the present invention, in Embodiment 5 of the present invention, it is possible to provide a bidirectional optical transmission system with a 1-core optical fiber which can reduce costs more than Embodiment 4 of the present invention.

A first mode of the present invention, in an optical transmission apparatus comprising a laser element and an optical fiber and having an optimum position where the efficiency of optical coupling between the laser element and the optical fiber becomes a maximum, adopts a configuration in which the laser element and the optical fiber are fixed at positions shifted from the optimum position in the direction of the optical axis by a value within a range from 10µm to 150µm.

According to this configuration, since the laser element and the optical fiber are fixed at the positions shifted from the optimum position in the direction of the optical axis by the value in the range from 10µm to 150µm, the influence of the reflected returned light is small and it is possible to realize analog transmission using only low-cost parts. According to this configuration, it is only necessary to arrange the laser element and the optical fiber within a predetermined range, which makes manufacturing easier.

A second mode of the present invention adopts the configuration of the first mode of the present invention,
in which outgoing light of the laser element is not parallel to the optical axis of the outgoing light from an end face of the optical fiber and the outgoing light of the laser element is not parallel to the optical axis of light reflected on the end face of the optical fiber.

According to this configuration, in addition to the effect of the first mode of the present invention, the positions of the laser element and the optical fiber can be adjusted easily.

A third mode of the present invention adopts the configuration of the first mode of the present invention,
in which the laser element is a multi-mode oscillation laser element, the optical fiber is a 1.3µm zero-dispersion type optical fiber and the efficiency of optical coupling between the multi-mode oscillation laser element and the optical fiber is equal to or less than 10%.

According to this configuration, in addition to the effects of the first mode of the present invention, even if reflected returned light is generated, it is possible to reduce the influence of the reflected returned light.

A fourth mode of the present invention adopts the configuration of the first mode of the present invention, in which the laser element is a multi-mode oscillation laser element, the optical fiber is a 1.3µm zero-dispersion type fiber, a multi-branching optical coupler is connected subsequent to the multi-mode oscillation laser element, and the product of the efficiency of optical coupling between the multi-mode oscillation laser element and the optical fiber and the square of the reciprocal of the number of branches of the multi-branching optical coupler is equal to or less than 10%.

According to this configuration, in addition to the effects of the first mode of the present invention, even if reflected returned light is generated, it is possible to reduce the influence of the reflected returned light.

The present application is based on Japanese Patent Application No.2003-370365 filed on October 30, 2003, entire content of which is expressly incorporated by reference herein.

### Industrial Applicability

The present invention is applicable to an optical transmission apparatus and optical transmission system which performs video delivery or mobile radio signal transmission using an optical transmission technology.

## Claims

1. An optical transmission apparatus comprising a laser element and an optical fiber and having an optimum position where the efficiency of optical coupling between said laser element and said optical fiber becomes a maximum, wherein
said laser element and said optical fiber are fixed at positions shifted from said optimum position in the direction of the optical axis by a value within a range from 10µm to 150µm.

2. The optical transmission apparatus according to claim 1, wherein outgoing light of said laser element is not parallel to the optical axis of the outgoing light from an end face of said optical fiber and the outgoing light of said laser element is not parallel to the optical axis of light reflected on the end face of said optical fiber.

3. The optical transmission apparatus according to claim 1, wherein said laser element is a multi-mode oscillation laser element, said optical fiber is a 1.3µm zero-dispersion type optical fiber and the efficiency of optical coupling between said multi-mode oscillation laser element and said optical fiber is equal to or less than 10%.

4. The optical transmission apparatus according to claim 1, wherein said laser element is a multi-mode oscillation laser element, said optical fiber is a 1.3µm zero-dispersion type fiber, a multi-branching optical coupler is connected subsequent to said multi-mode oscillation laser element, and the product of the efficiency of optical coupling between said multi-mode oscillation laser element and said optical fiber and the square of the reciprocal of the number of branches of said multi-branching optical coupler is equal to or less than 10%.
